# EUROPEAN PATENT APPLICATION

(11) **EP 4 707 075 A1**
(43) Date of publication of application: **11.03.2026**
(21) Application number: 25200770.3
(22) Date of filing: 08.09.2025
(51) Int. Cl.: B60R 3/02, B60R 3/00

(54) **POWER RUNNING BOARD WITH SMART ACTUATOR**

(30) Priority: 07.09.2024 US 202463692055 P
(71) Applicant: Magna Exteriors Inc., Aurora ON L4G 7K1 (CA)
(72) Inventor: Berkebile, Tom, PERRYSBURG, OHIO, 43551 (US); Piotrowski, Zygmunt, ETOBICOKE, ONTARIO, M9C 2M8 (CA); Hilton, Benjamin, BOLTON, ONTARIO, L7E 0A5 (CA); Kim, Hyun-Jong, NEWMARKET, ONTARIO, L3X 1S4 (CA); Brzyski, Robert, BRAMPTON, ONTARIO, L6R 3A3 (CA); Paton, Gordon, NORTH YORK, ONTARIO, M3C 4G9 (CA)
(74) Representative: Witte, Weller & Partner Patentanwälte mbB

(57) **Abstract**

A vehicle step arrangement (100, 200, 300) includes a step (12, 18; 302, 304) connected to a vehicle, capable of moving between stowed and deployed positions. The arrangement further includes at least one actuator (20, 24; 342, 324') connected to a transmission that controls and drives the step's movement. A local controller (30; 306), connected to both the actuator and the vehicle's local area network (LAN) (34; 328), receives vehicle information data from the LAN and is programmed with step commands to operate the actuator and move the step. The step command from the local controller is generated independent of the LAN, thereby eliminating the need for LAN oversight of all of the functions of the vehicle step arrangement.

## Description

### FIELD OF THE INVENTION

The present invention relates to a power running board with a local controller at the actuator.

### BACKGROUND OF THE INVENTION

Many automotive controls systems use a central control system with a central electronic control unit (ECU) that controls all of the vehicle functions over a local area network (LAN). However, as vehicles become more complex the amount of data being transferred over the LAN has become quite large and it can present problems when operating many different functions simultaneously. A current trend in designing control systems for automobiles is to provide zonal architectures, where lower level tasks are moved off the ECU and LAN, so they can be accomplished locally rather than directly by signals from the ECU. One area where zonal architecture is useful is in the area of automatic power steps and running boards. It is desirable to provide a smart actuator that is able to locally control the operation of the automatic step, without continuous communication with the ECU over the LAN.

### SUMMARY OF THE INVENTION

The present invention is directed to a vehicle step arrangement that includes at least one step connected to a vehicle that is moveable between a stowed position and one or more deployed positions. The step can be any type of step including a running board, bed step, roof access step, engine compartment step, or rear step. Each step typically has some type of linkage or in some cases multiple linkages, which connect the step to the vehicle. Typical linkages include a four bar link, swing arm, or other suitable link. Connected to the linkage is a transmission that is connected to at least one actuator. The transmission is a device that converts the rotational force of the actuator into desired motion of the link. Examples of transmissions include gear trains, rack and pinions or other suitable mechanisms. The actuator drives the transmission and controls the movement of the at least one step between the stowed position and deployed position.

The vehicle step arrangement further includes a local controller connected to both the at least one actuator and a LAN of a vehicle. The local controller receives a plurality of vehicle information data from the ECU over the LAN, and the local controller is programmed with a plurality of step commands that control the operation of the actuator, wherein at least one of the plurality of step commands controls movement of the at least one step independent of the LAN.

The local controller includes a zonal module that will determine when the device operates. In some applications the zonal module will include a calibration file loaded on the zonal module. The calibration file contains many functional operational values to include obstacle detection commands and timers.

The smart actuator is comprised of an electric actuator, a transmission (i.e., gearbox), and an ECU. The ECU controls the function of the electric actuator and movement of the step between the deployed and stowed positions. The ECU also controls the speed of the running board throughout the deploy and stow events to ensure a smooth motion and to minimize the operating sound of the electric actuator. The ECU also compares the actuator speed and current power consumption during the stow and deploy events to determine if power or speed are exceeding allowable levels and then reacting if there is an event that causes these parameters to fall outside the allowable limits. The ECU can either be external to the actuator and gearbox assembly for serviceability of the ECU or integrated into the electronics of the electric actuator assembly.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Fig. 1A is a side perspective view of a vehicle step arrangement having two four bar links in the extended position.
Fig. 1B is a side perspective view of a vehicle step arrangement having two four bar links in the retracted position.
Fig. 2A is a side perspective view of a vehicle step arrangement having two swing arms in the extended position.
Fig. 2B is a side perspective view of a vehicle step having two swing arms in the retracted position.
Fig. 3 is an enlarged side perspective view of the actuator connected to a running board.
Fig. 4 is an enlarged bottom perspective view of the actuator connected to a running board.
Fig. 5 is a side perspective view of the actuator having a local controller.
Fig. 6 is another side perspective view of the actuator having a local controller.
Fig. 7 is a cross-sectional side elevational view of a portion of the actuator having the local controller connected.
Fig. 8 is a pin connection diagram of the local controller.
Fig. 9 is a schematic diagram of a vehicle step arrangement having two steps controlled by a single local controller.

### DETAILED DESCRIPTION OF THE PREFERRED EMBODIMENTS

The following description of the preferred embodiments is merely exemplary in nature and is in no way intended to limit the invention, its application, or uses.

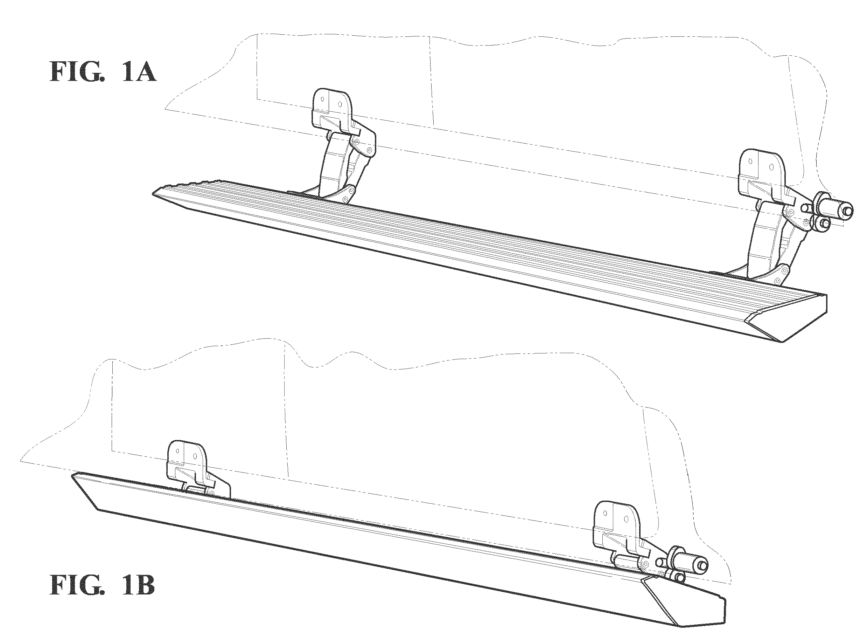

Referring now to Fig. 1 as shown there is a vehicle step arrangement 100, 200 according to two different embodiments of the present invention. Vehicle step arrangement 100 includes a running board having a step 12, that moves between a stowed position and a deployed position using four bar links 14a, 14b that connect the step 12 to a vehicle (not shown) typically at the vehicle frame. While two four bar links are shown, it is within the scope of this invention for there to be a greater or lesser number of four bar links, depending on the size of the step. The four bar links 14a, 14b have a kinematic movement that moves the step 12 in a generally angular motion away from a stowed position to an extended position. The vehicle step arrangement 200 has two rotating arms 16a, 16b connected to a step 18. The rotating arms 16a, 16b move between a stowed position and a deployed position by rotating the step 18. While two rotating arms are shown it is within the scope of the invention for a greater or lesser number of rotating arms to be used depending on the size of the step 18. The vehicle step arrangement 100, 200 as shown are a vehicle running board for one side of the vehicle, such as a left side or right side, it is within the scope of this invention for the other corresponding vehicle running board on the opposing side to be included, such as a right side or left side running board. Additionally, while the vehicle step arrangement 100, 200 is shown as being a running board, it is within the scope of this invention for other embodiments to be directed to other types of steps for a vehicle, such as a vehicle bed step, roof step, engine compartment step, or other suitable steps that are connected to the vehicle.

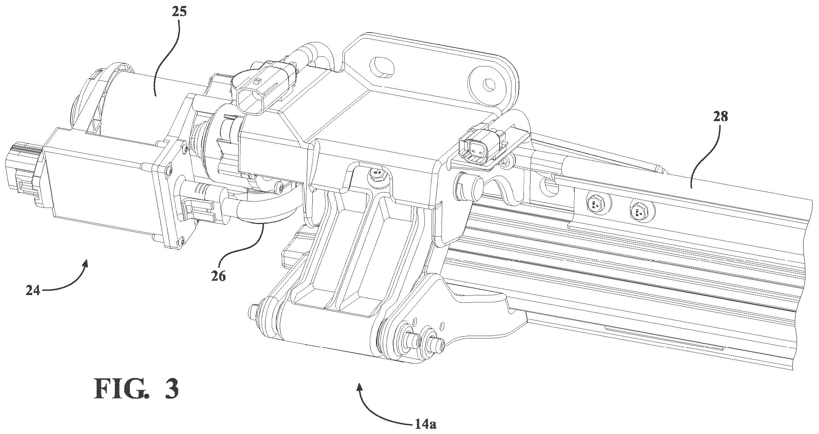

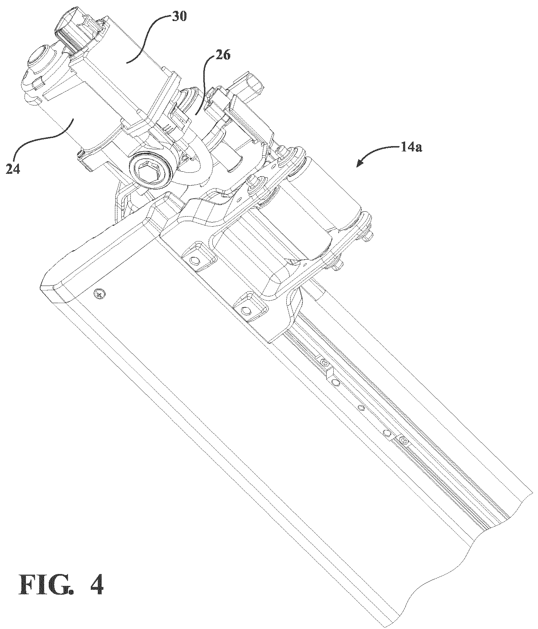

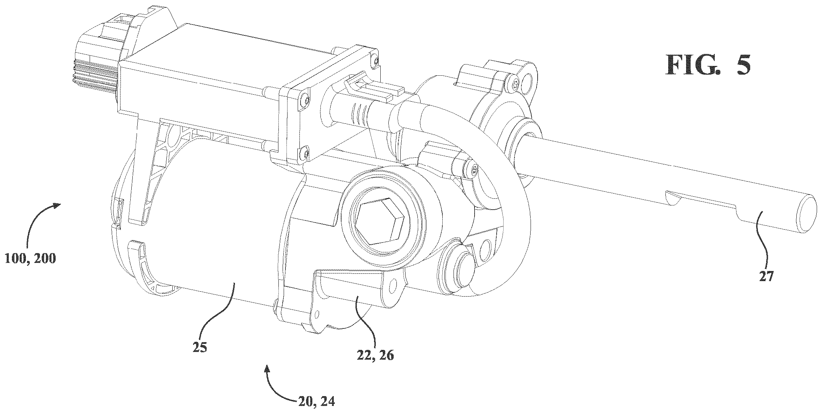

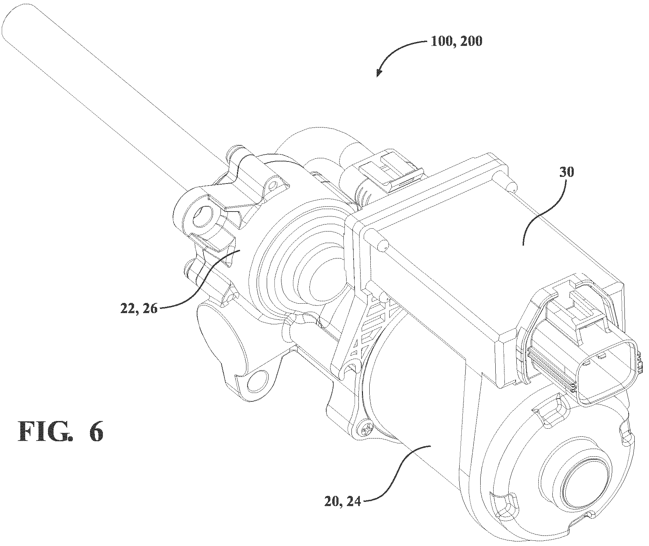

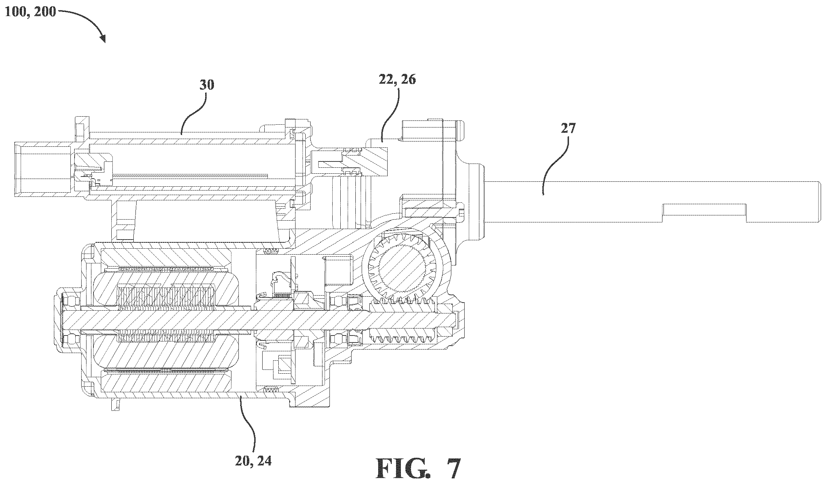

Referring now to all Figs. 1A-3 the vehicle step arrangement 100 includes an actuator 24 which is a motor 25 that is connected to a transmission 26. The transmission 26 is a gear train connected to a rotatable output shaft of the motor 25. The transmission 26 has a rotatable output shaft 27 that moves the four bar link 14a. There is also a torque transfer rod 28 that connects between the four bar link 14a to the four bar link 14b so that force from the actuator 24 is transferred through the four bar link 14a to drive the four bar link 14b. In Fig. 1B the vehicle step arrangement 200 includes an actuator 20 that is a motor connected to a transmission 22. The transmission 22 is a gear train connected to a rotatable output shaft of the motor. The transmission 22 is connected to the rotating arm 16a. Both vehicle step arrangements 100, 200 have some identical components, for example referring also to Figs 4-7, details of portions of each vehicle step arrangement 100, 200 are shown. More specifically the transmission 22, 26 controls movement of the respective step 12,18 between the stowed position and deployed position. A local controller 30 as shown is directly connected to the actuator 20, 24.

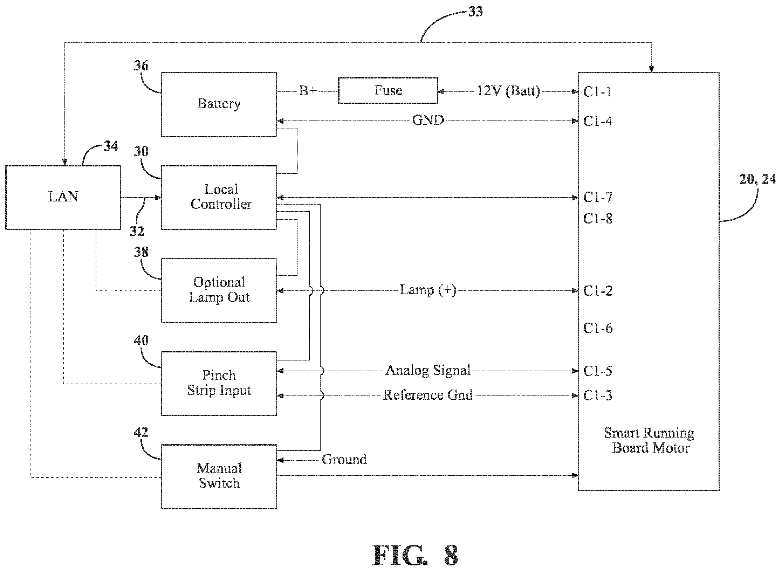

The local controller 30 is connected to both the actuator 20, 24 and a local area network (LAN) 34 (shown in Fig. 8) of the vehicle. The local controller 30 receives a plurality of vehicle data signals from the LAN 34 and the local controller 30 is programmed with a plurality of step commands that are transmitted to and control the actuator 20, 24. One of the plurality of step commands controls movement of the step 12, 18 independent of the LAN 34. The plurality of step commands for example include values based on the local controller monitoring motor speed and electric current drawn by the motor, power regulation provided to the motor from the local controller to control motor speed, and motor direction where the local controller will command the motor to reverse if an obstacle is detected.

In some aspects, the techniques described herein relate to a vehicle step arrangement, further including a local controller bypass 33 connected to the actuator 20, 24. The local controller bypass 33 allows the actuator 20, 24 to be controlled by signals directly from the LAN 34. The local controller 30 utilizes the plurality of vehicle data signals received from the LAN 34. A one of the plurality of step commands is transmitted to the actuator 20, 24 based on the plurality of vehicle data signals from the LAN 34 as well as inputs received from other devices. Fig. 8 is a schematic diagram showing the various inputs to the local controller 30. The local controller 30 utilizes a single wire input 32 from the LAN 34. In another alternative embodiment of the invention there is a bypass that allows the local controller 30 to be bypassed so the actuator 20, 24 is directly controlled by the LAN 34, a three wire connection is utilized, which include a first LAN wire, a second LAN wire and a wire input from a sensor such as a Hall effect sensor. The plurality of vehicle data signals are transmitted from the LAN 34 connection through the single wire input 32. The plurality of vehicle data signals include information pertaining to one or more selected from a group including proximity sensors, vehicle speed, door open, gear setting, battery voltage, crash status, pinch sensor data, manual switch data, and pre-set commands. As shown in Fig. 8 there is a battery 36, lamp switch 38, pinch sensor 40 and manual switch 42 that generate vehicle data signals. In one embodiment these devices communicate directly with the actuator 20, 24. In another embodiment these devices send signals directly to the local controller 30, which then determines whether to send a step command control to the actuator 20, 24. In yet another alternate embodiment of the invention the battery 36, lamp switch 38, pinch sensor 40 and manual switch 42 that generate vehicle data signals send signals to the LAN 34, which then relays vehicle data signals about each of these devices to the local controller 30. All of these different embodiments are within the scope of the present invention.

It is also within the scope of the invention for the local controller 30 to receives local data having information pertaining to at least one selected from a group including, actuator temperature, actuator speed, hall effect sensor inputs, actuator current, actuator vibration, pinch sensor data, and manual switch data, and wherein the at least one of the plurality of step commands is generated in response to the local data.

In another embodiment of the invention the vehicle step arrangement 100, 200, further includes a light connected to the step 12, 18 that is selectively illuminated in response to a light control command from the local controller 30. The decision to illuminate the light is made by the local controller 30 in response to a one of the plurality of vehicle data signals from the LAN 34, where the vehicle data signals pertain to one or more lighting conditions selected from a group including a time of day value, an ambient light value, a user pre-set value, and a manual switch on value. It is also within the scope of the invention for the light to be manually operated using a light switch connected to the local controller or directly to the actuator. The light switch is operated by a user and sends a switch signal to the local controller 30 to turn the light off and on.

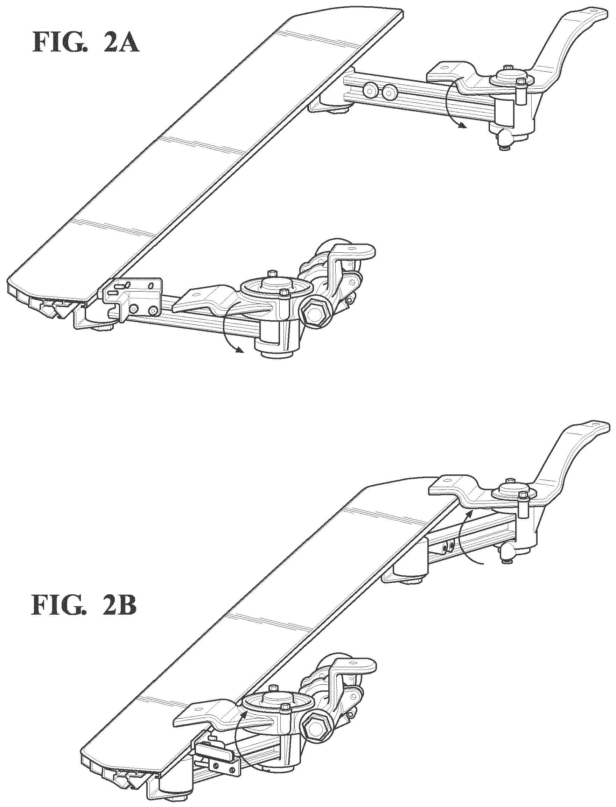

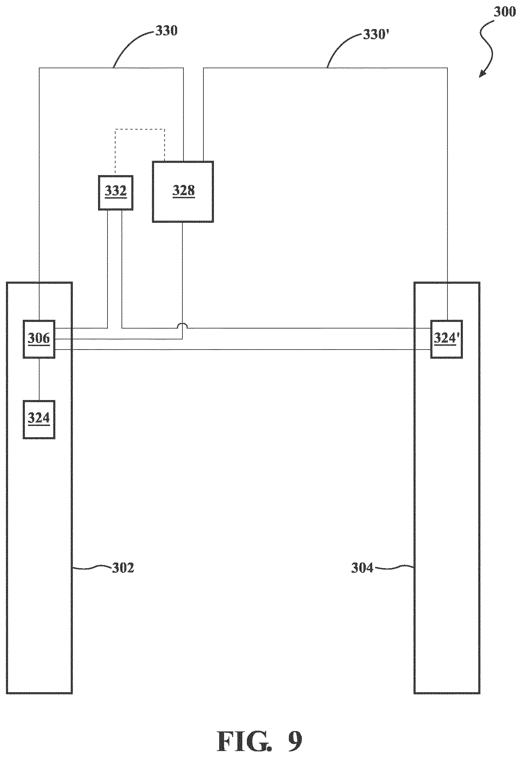

Fig. 9 is a schematic diagram of a vehicle multi-step arrangement 300 having two steps controlled by a single local controller 306 is shown. While two steps are being controlled it is within the scope of this invention for there to be more than two steps depending on the need of a particular application. As shown there is a first step 302 and a second step 304. The first step 302 can be a driver's side step, and he second step 304 can be a passenger side step, however, it is within the scope of this invention for the first step 302 and the second step 304 to be located at any other location on a vehicle where a step is needed, such as a bed step, side bed step, rear passenger step, front bumper step or rear liftgate step. The first step 302 and second step 304 also can have the same components show in Figs. 1A, 1B, 2A, 2B which include the step 12, 18 and four bar links 14a, 14b, rotating arms 16a, 16b, single links, single arms or any other suitable step and moveable connection to a vehicle. The first step 302 and second step 304 each include an actuator 324,324' that is controlled by a single local controller 306 that can be connected to one of the actuators 324, 324' or in the alternative can be connected to an independent location between the two actuators 324, 324'.

The single local controller 306 is connected to and receives signals from a local area network (LAN) 328 on the vehicle, which communicates to the local controller 306 in a manner similar to the LAN 34 described above in Fig. 8. The local controller also receives. The local controller 306 receives a plurality of vehicle data signals from the LAN 328 and the local controller 306 is programmed with a plurality of step commands that are transmitted to and control the actuators 324, 324'. One of the plurality of step commands controls movement of the first step 302 and second step 304 independent of the LAN 328.

In some aspects, the techniques described herein relate to a vehicle step arrangement, further including a local controller bypass 330, 330' respectively connected to the actuator 324, 324'. The local controller bypass allows the actuators 324, 324' to be controlled by signals directly from the LAN 328. The local controller 306 utilizes the plurality of vehicle data signals received from the LAN 328. A one of the plurality of step commands is transmitted to the actuator 324, 324' based on the plurality of vehicle data signals from the LAN 328 as well as inputs received from other devices. Fig. 9 shows a schematic diagram showing the various inputs to the local controller 306. The local controller 306 utilizes a single wire input from the LAN 328. The plurality of vehicle data signals are transmitted from the LAN 328 connection through the single wire input. The plurality of vehicle data signals include information pertaining to one or more selected from a group including proximity sensors, vehicle speed, door open, gear setting, battery voltage, crash status, pinch sensor data, manual switch data, and pre-set commands.

Fig. 9 also shows local device data 332, 332' which includes various signals specific to the respective first step 302 and second step 304 that is transmitted to the local controller 306. The local device data 332, 332' includes data from various sources, which includes the analogous sources shown in Fig. 8, such as but not limited to the battery 36, the lamp switch 38, the pinch sensor 40 and the manual switch 42, all of which generate vehicle data signals. In one embodiment these devices communicate directly with the respective actuators 324, 324'. In another embodiment these devices send signals directly to the local controller 306, which then determines whether to send a step command control to the actuators 324, 324'. In yet another alternate embodiment of the local device data 332, 332' is sent to the LAN 328 which then relays the vehicle data signals about each of these devices to the local controller 306. All of these different embodiments are within the scope of the present invention.

It is also within the scope of the invention for the local controller 306 to receive local data having information pertaining to at least one selected from a group including, actuator temperature, actuator speed, hall effect sensor inputs, actuator current, actuator vibration, pinch sensor data, and manual switch data, and wherein the at least one of the plurality of step commands is generated in response to the local data.

In another embodiment of the invention the first step 302 and the second step 304 each include a light connected that is selectively illuminated in response to a light control command from the local controller 306. The decision to illuminate the light is made by the local controller 306 in response to a one of the plurality of vehicle data signals from the LAN 328 or the local device data 332, 332', where the vehicle data signals pertain to one or more lighting conditions selected from a group including a time of day value, an ambient light value, a user pre-set value, and a manual switch on value. It is also within the scope of the invention for the light to be manually operated using a light switch connected to the local controller 306 or directly to one of the respective actuators 324, 324'. The light switch is operated by a user and sends a switch signal to the local controller 306 to turn the light off and on.

The description of the invention is merely exemplary in nature and, thus, variations that do not depart from the gist of the invention are intended to be within the scope of the invention. Such variations are not to be regarded as a departure from the spirit and scope of the invention.

## Claims

1. A vehicle step arrangement (100; 200; 300) comprising:
at least one step (12, 18; 302, 304) connected to a vehicle and moveable between a stowed position and one or more deployed positions;
at least one actuator (20, 24; 324, 324') connectable to the at least one step (12, 18; 302, 304), wherein the at least one actuator (20, 24; 324, 324') provides forces that moves the at least one step (12, 18; 302, 304) between the stowed position and deployed position, and
a local controller (30; 306) connected to both the at least one actuator (20, 24; 324, 324') and a local area network (LAN) (34; 328) of the vehicle, wherein the local controller (30; 306) receives a plurality of vehicle data signals from the LAN (34; 328) and the local controller (30; 306) is programmed with a plurality of step commands that are transmitted to and control the at least one actuator (20, 24; 324, 324'), wherein at least one of the plurality of step commands controls movement of the at least one step (12, 18; 302, 304) between the stowed position and one or more deployed positions and the one of the plurality of step commands is generated by the local controller (30; 306) separate from a signal from the LAN (34; 328).

2. The vehicle step arrangement (100; 200; 300) of claim 1, further comprising a local controller bypass (33; 330; 330') connected to the at least one actuator (20, 24; 324, 324') and the local controller (30; 306), wherein the local controller bypass (33; 330; 330') allows the at least one actuator (20, 24; 324, 324') to be controlled by signals directly from the LAN (34; 328).

3. The vehicle step arrangement (100; 200; 300) of claim 1 or 2, wherein the local controller (30; 306) utilizes the plurality of vehicle data signals from the LAN (34; 328) and a second one of the plurality of step commands is transmitted to the at least one actuator (20, 24; 324, 324') based on the plurality of vehicle data signals from the LAN (34; 328).

4. The vehicle step arrangement (100; 200; 300) of any one of claims 1 to 3, wherein the at least one step (12, 18; 302, 304) is one of a group comprising a driver side running board, a passenger side running board and a bed step.

5. The vehicle step arrangement (100; 200; 300) of any one of claims 1 to 4, further comprising a light connected to the at least one step (12, 18; 302, 304) that is selectively illuminated in response to a light control command from the local controller(30; 306).

6. The vehicle step arrangement (100; 200; 300) of claim 5, wherein a decision to illuminate the light is made by the local controller (30; 306) in response to a one of the plurality of vehicle data signals includes data that indicates one or more lighting conditions selected from a group including a time of day value, an ambient light value, a user pre-set value, and a manual switch on value.

7. The vehicle step arrangement (100; 200; 300) of claim 5 or 6, further comprising a manually operated light switch connected to the local controller (30; 306), wherein the manually operated light switch is operated by a user and sends a switch signal to the local controller (30; 306) to turn the light off and on.

8. The vehicle step arrangement (100; 200; 300) of any one of claims 1 to 7, wherein the least one actuator (20, 24; 324, 324') is connected to a transmission (22, 26) that is connected to the at least one step (12, 18; 302, 304), and the at least one actuator (20, 24; 324, 324') and the transmission (22, 26) provide forces that move the at least one step (12, 18; 302, 304) between the stowed position and deployed position.

9. The vehicle step arrangement (100; 200; 300) of claim 8, wherein the transmission (22, 26) is connected to a four bar linkage (14a, 14b) that movably connects the at least one step (12, 18; 302, 304) to the vehicle.

10. The vehicle step arrangement (100; 200; 300) of claim 8 or 9, wherein the transmission (22, 26) is connected to a swing arm that movably connects the at least one step to the vehicle.

11. The vehicle step arrangement (100; 200; 300) of any one of claims 1 to 10, wherein the plurality of vehicle data signals include information pertaining to one or more selected from a group including proximity sensors, vehicle speed, door open, gear setting, battery voltage, crash status, pinch sensor data, manual switch data and pre-set commands.

12. The vehicle step arrangement (100; 200; 300) of any one of claims 1 to 11, further comprising:
wherein the local controller (30; 306) receives local data having information pertaining to at least one selected from a group including, actuator temperature, actuator speed, hall effect sensor inputs, actuator current, actuator vibration, pinch sensor data, and manual switch data, and
wherein the at least one of the plurality of step commands is generated in response to the local data.
